# EUROPEAN PATENT APPLICATION

(11) **EP 2 690 076 A1**
(43) Date of publication of application: **29.01.2014**
(21) Application number: 12177562.1
(22) Date of filing: 24.07.2012
(51) Int. Cl.: C04B 28/18

(54) **Method for manufacturing multi-phase hydraulic binders**

(71) Applicant: Cemex Research Group AG, 2555 Brügg bei Biel (CH)
(72) Inventor: CHARQUERO GARCIA, Juan, 46020 Valenciaa (ES); CONSTAIN VAN.RECK, Juan Pablo, 28010 Madrid (ES); NARANJO MARTINEZ, María del Carmen, 46360 Buñol - Valencia (ES); QUINTERO MORA, Néstor Isaías, CH-2504 Biel-Bienne (CH)
(74) Representative: Carvajal y Urquijo, Isabel

(57) **Abstract**

The present invention relates to a method for manufacturing multi-phase hydraulic binders comprising the steps of:
- crushing (A) limestone (A1) and agricultural waste (A2) from grass cultivation,
- burning the agricultural waste (B2) by controlled combustion to give rise to acidic ash,
- decarbonising the limestone (B1) by harnessing the energy generated in agricultural waste combustion (B2),
- mixing the acidic ash from agricultural waste combustion with the limestone decarbonisation product (B3),
- hydrothermally treating (C) of the mixture obtained ending with drying the product obtained and
- hydraulically activating (D) the dried product.

## Description

### Technical Field

The method is encompassed within the field of methods for manufacturing hydraulic binders such as Portland cements.

### Background

Today the most widespread process for manufacturing hydraulic binder is the industrial process for manufacturing Portland cements in high temperature rotating kilns from natural raw materials of mineral origin (limestone, sand, clays, iron ore, etc...) or raw materials from industrial processes. In this process, after suitably mixing and grinding the raw materials, this mixture is introduced in an kiln, usually a horizontal and rotating kiln where compound mixtures such as tricalcium silicate, alite (Ca3SiO5) dicalcium silicate, belite (Ca₂SiO₄), tricalcium aluminate (Ca₃Al₂O₆) and calcium aluminate ferrite (Ca4(Al,Fe)₄O₁₀ are generated at high temperatures (higher than 1450 °C) into a product referred to as clinker, which is transformed into a hydraulic binder once it is mixed and ground with an SO₃ donor, as a setting regulator, and with the possibility of being, added with fly ash, limestone, blast furnace slags, natural puzzolanas, etc..

The process for manufacturing clinker in a rotating kiln is an extremely inefficient process energy wise. With a theoretical enthalpy reaction of 420 kcal/kg of clinker, due to the inefficiencies of the process between 780 -1300 kcal/kg of clinker are required for producing a clinker with an acceptable quality, since:
- clinkerisation, being an exothermic process and requiring high temperatures (1,350°C-1850°C), is the-step which sets the lower limits of power consumption.
- The kiln must be sufficiently ample for accommodating these gases occupying at least 85% of the volume of the kiln, such that a lot of energy is required for heating the gases of the kiln which heat the material and which must subsequently be cooled before releasing them into the atmosphere.
- Insulating the rotating kiln with refractory material is sufficiently inefficient, causing large losses by convection, conduction and radiation.
- Thermal loss by radiation of the process and of the end product is not used.

Likewise, belite cements is produced in Portland cement production facilities, using the same kilns, not improving processes and maintaining the energy inefficiencies thereof.

On the other hand, there is a patent EP1781579 - which discloses the method for producing and preparing hydraulic binders from sulphur-aluminate clinker with a high belite content. This process has the following drawback with respect to the process object of this patent,
- requiring greater temperatures for obtaining the product, between 1220°C and 1320°C in a rotating kiln of the types used for manufacturing Portland cement clinker.
- a sufficiently oxidising atmosphere to prevent reducing the calcium sulphate into sulphur dioxide, which requires an excess of air, 02, for clinkerisation which entails a degree of energy inefficiency in the process.
- reducing CO2 emissions by 25% with respect to the production of a Portland cement clinker.

There are many publications relating to cement production, such as Patent US5509962 which discloses the manufacturing of a cement clinker formed mainly by the belite phase in its alpha variety. It uses a mixture of 70.6% limestone, 22% rice husk ash, with a total Si02 of 85% as raw material and several commercial additives providing 2.4% Fe2O3 2.5% Na2CO3 and 2.5% K2C03. The mixture is ground and pressed forming cylindrical pellets which are burned at 1400°C for one hour. The clinker obtained is ground until reaching a Blaine fineness of 0.5 m2/g and they manufacture two types of cement: FIRH with 77% clinker, 7% anhydrite gypsum and 16% of rice husk ash and the Figs cement with 64.2% clinker, 5.8% anhydrite and 30% slag.

In Ceramic Bulletin, Vol 71 (4) 1992 00 642-647, Weimin Jiang and Della M. Roy describe the synthesis of a low energy activated belite cement from a mixture of CaO and fly ash (FA) from the combustion of coal with low lime content. The synthesis process has several parts. The first consists of subjecting the mixture of CaO, FA and water to heating at 80°C for 10 hours, then heating the mixture at 200°C for 4 hours in a pressurised reactor where the precursor phases of the cement are obtained, which precursor phases are finally dehydrated by heating between 500°C-900°C for 4 hours. The final cement contains the belite phase β-C2S, mayenite C12A7 and CaC03.

Based on the work of Wimin and Roy, patent ES 2 223 275 B1 by Sara Goñi *et*. *al*. describes the synthesis of a new belite cement clinker formed mainly by the low temperature alpha prime dicalcium silicate phase (α'L-Ca2SiO4). With the hydrothermal synthesis of precursors in a pressurised reactor, heated with a thermal jacket at 200°C and maintaining these conditions for 4 hours. Subsequently the product obtained in the hydrothermal treatment is subjected to a heating of up to 800°C with two temperature ramps: up to 600 at 10°C/min and 600 to 800°C at 5°C/min.

In the patents US 2010/0186634 A1 and US 2011/0041737 A1 Guenter Beuehle *et. al.* describe the synthesis of a single-phase hydraulic binder containing silicon, calcium, oxygen and hydrogen atoms. They are based on raw materials of mineral origin (quartz, silicon, mica, feldspars) and/or industrial treatment (blast furnace slags, glass) and/or demolition remains (old concretes). The synthesis process consists of three phases: the first phase of this process is performed in a pressurised autoclave at 140 - 300°C in the manner similar to that described previously by S. Goñi and Wimin Roy, using synthesis times of 72 to 87 hours and the process being able to optimise by treatment for 6 hours at 190°C in an improved process using Na(OH) as an activator and adding crystal seeds of α-C2SH as core precursors of the reaction in all cases. In a second phase the material, previously dried at 100°C is ground together with a silicic compound in a ball, disc or roller mill. The third phase, if necessary, consists of the subsequent drying until obtaining a product with a water content less than 20%.

Xiaochun Xu, Yun Bao, Chunshan Song, Weishen Yang, Jie Liu and Liwu Lin in the article "Microwave-assisted hydrothermal synthesis of hydroxy-sodalite zeolite membrane" published in Microporous Mesoporous Mater., 2004, 75, 173-181, describes the synthesis of a high quality pure hydroxy-sodalite zeolite membrane, using a hydrothermal synthesis method using microwaves and the following advantages have been reported: *"Compared with the conventional hydrothermal synthesis (CHS), Micro wave-assisted hydrothermal synthesis (MAHS ) of zeolites has the advantages of a short synthesis time,broad synthesis composition, small zeolite particle size, narrow particle size distribution and high purity".*

### Description

The invention relates to an industrial manufacturing process for manufacturing a hydraulic binder made up of different phases, therefore a multi-phase hydraulic binder, of the types known as calcium silicate hydrates which contain silicon, calcium, hydrogen and oxygen and which may contain iron, aluminium, sodium, potassium, chlorine and phosphorus among others elements, with stoichiometry defined by a CaO/SiO2 molar ratio range of 0.5 - 3.0.

The method of the invention is differentiated from the known methods in that it comprises the steps of:
- obtaining acidic ash with silicon as the main/predominant element in the composition from the controlled combustion of agricultural waste from grass cultivation capable of generating acidic ash, in which the silicon is the main element such as the grass waste (such as for example rice husk, corn cob husk, reed bagasse, among others), reeds, bracken, reeds and old tree bark among others, and
- using the energy supply obtained from the controlled combustion of the agricultural waste from the grass cultivation used for the manufacturing process itself.
- using the acidic ash as first silicon source material in the synthesis of the multi-phase hydraulic binder and in the subsequent addition in the hydraulic activation phase, since in the conditions of obtaining the ash the silicon is mainly amorphous and therefore more reactive than that from well crystallised phases whether of natural mineral origin (sand, quartz, feldspar,..etc) or of industrial origin, such as for example blast furnace slag,
- optimising in turn the process by applying new technologies, such as hydrothermal synthesis with microwaves which is more efficient than conventional ones operation and energy wise,

With this organic waste combustion step and the using of energy obtained in said combustion, significant synthesis time reductions are achieved, among other advantages, with respect to the conventional hydrothermal systems (pressurised autoclaves heated by devices formed by electric resistances or enveloping oil baths) significantly reducing the emissions of green house effect gases.

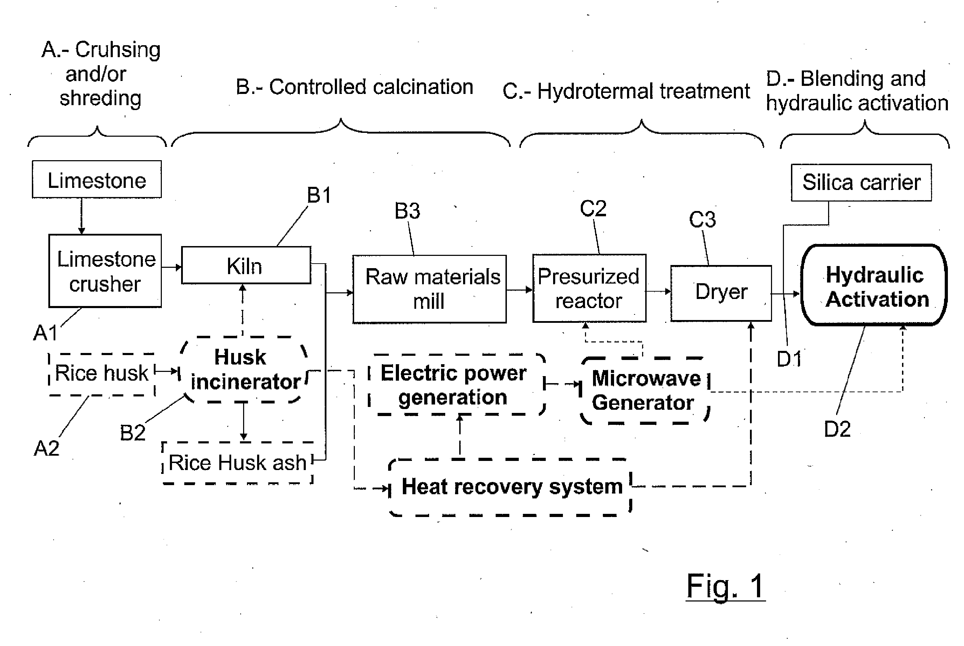

As it is shown in Figure 1, the method for manufacturing multi-phase hydraulic binders to which this invention relates comprises the following steps:

### A.- Crushing

- A1.-The limestone will be preferably be crushed to a size smaller than 50 mm in a crusher of the type which are used for crushing raw materials in cement industry.
   Optionally, it may include the following further step relating to agricultural waste:
- A2.-Cutting/shredding the agricultural waste from grass cultivation, if necessary, into fragments with a size less than 5 mm for the purpose of obtaining a good combustion thereof.

### B.- Controlled burning

- B1.- Decarbonising the limestone at a maximum temperature of 850°C.

Optionally, if step A2 is performed the method may include the following further step relating to agricultural waste:
- B2.-Burning agricultural waste from the grass cultivation in an incinerator of the type known which are used for obtaining ash, in temperature controlled conditions at a maximum temperature of 850°C and a residence time of said maximum temperature of 5 hours, for the purpose of achieving the desired physical and crystalographic characteristics, in other words, crystal size, degree of amorphisation or crystalisation state of the silica, tridymite or amorphous silica, such that ash more reactive than the natural raw materials of mineral origin or that from other industrial processes are obtained. These special characteristics of the ash obtained by controlled combustion provide a substantial advantage with respect to the materials used in patents US 2010/0186634 and US 2011/0041737, since by being more reactive due to their high degree of amorphisation, large crystal size and high degree of purity (unlike slag and fly ash they virtually lack aluminium, iron, calcium and sulphur) they facilitate maximum efficiency in the hydrothermal synthesis phase because they require less synthesis time and lower temperatures and pressures, which entails a great energy saving in the process to which the current invention relates.
   If this step B2 is carried out, decarbonisation of the limestone at a maximum temperature of 850°C may be achieved by means of heat recovery by a heat recovery system installed in the incinerator, configured to allow using the heat generated in the combustion for decarbonising the limestone necessary for the process, drying the product at the exit of the hydrothermal synthesis phase and allowing harnessing the residual heat:
   By way of example, not intended to limit the scope of this invention, the rice husk has on average a heating power lower than 3,600 Kcal/kg. Considering that the mean ash content of the rice husk is 15% and that the total SiO₂ of the ash can be 85%, for preparing one ton of mixture with a CaO/SiO₂ molar ratio = 2, 15.24 Gcal are generated 1.06 Gcal of which are theoretically needed for decarbonising the limestone present in this mixture. So, there is a residual heat of 14.2 Gcal that can be extracted for the material drying phases and for another way to make use of same in the rest of the phases of the process, for example electric energy conversion for generating microwaves.
- B3.- Crushing the limestone decarbonisation product obtained in step B1. If step B2 is performed, step B3 may include mixing and/or correcting and crushing the mixture of ash obtained in the combustion of the agricultural waste from the grass cultivation and the limestone decarbonisation product for obtaining the CaO/SiO₂ molar ratios between 0.5 and 2.0. 3% of Portland cement clinker is added in order for it to act as a precursor of the reaction forming the mixture of calcium hydroxide silicate phases.

### C.- Hydrothermal treatment

- C1-.Before the treatment is performed water is added with water/solid ratios of 10 parts of water to one part of solid, preferably 5 to 1 and more preferably 3 to 1.
- C2.- Subsequently, the hydrothermal treatment will be performed in a pressurised reactor made of microwave transparent material, subjected to the action of a microwave generator with a frequency of 2.45 GHz adjusting the power for obtaining temperatures between 150 and 250°C at pressures between 10-15 bar during the necessary time period. Hydrothermal synthesis by means of microwaves provides advantages with respect to the existing processes described in the existing patents for obtaining the hydraulic binder with CaO/SiO2 molar ratios between 0.5 - 3.0, since the heating speed is much faster, the electromagnetic field energy of the microwaves acts directly on the reactive molecules, making energy transfer more efficient than those conventionally described, the heat distribution within the reactor is more homogenous and shorter reaction times are required.
- C3.- Finally, the product obtained in the hydrothermal treatment phase is dried for removing uncombined water. The humidity of the material after this drying must be less than 20%.

### D.- Hydraulic activation

- D1.- The dry product from the hydrothermal treatment is mixed with a silica source in a proportion of 10% to 50%. The silica donor can preferably be acidic ash of agricultural origin from grass cultivation, however, it can also be quartz, blast furnace slag, fly ash and feldspars among others.
- D2.- Hydraulic activation of the product by subjecting the mixture to the action of a microwave field with a frequency of 2.45 GHz for at least 15 minutes, for obtaining the suitable coupling which allows reorganising hydrogen bridges and removing water molecules.
- D3.- Optionally or additionally grinding for at least 200 seconds in a disc, ball or roller mill for completing the hydraulic activation of the calcium hydroxide silicate.

If steps A2 and B2 are followed, the product obtained is a hydraulic binder obtained from a silicon source of plant origin with optimisation of the energy released in the combustion of the agricultural waste giving rise to the acidic ash. It is a sustainable and renewable process which minimises CO2 emissions and the emissions of green house effect gases in general, including SO2 and NOx, since it does not use fossil fuel and is performed at temperatures lower than 850°C.

Hence, in a preferred embodiment the method of the invention comprises the steps of:
- obtaining acidic ash with silicon as the main/predominant element in the composition from the controlled combustion of agricultural waste from grass cultivation capable of generating acidic ash, in which the silicon is the main element such as the grass waste (such as for example rice husk, corn cob husk, reed bagasse, among others), reeds, bracken, reeds and old tree bark among others, and
- using the energy supply obtained from the controlled combustion of the agricultural waste from the grass cultivation used for the manufacturing process itself.
- using the acidic ash as first silicon source material in the synthesis of the multi-phase hydraulic binder and in the subsequent addition in the hydraulic activation phase, since in the conditions of obtaining the ash the silicon is mainly amorphous and therefore more reactive than that from well crystallised phases whether of natural mineral origin (sand, quartz, feldspar,..etc) or of industrial origin, such as for example blast furnace slag,
- optimising in turn the process by applying new technologies, such as hydrothermal synthesis with microwaves which is more efficient than conventional ones operation and energy wise,

With this organic waste combustion step and the using of energy obtained in said combustion, significant synthesis time reductions are achieved, among other advantages, with respect to the conventional hydrothermal systems (pressurised autoclaves heated by devices formed by electric resistances or enveloping oil baths) significantly reducing the emissions of green:house effect gases.

This method also offers the following advantages:
- The process object of the present invention provides a solution to the treatment process of agricultural waste which-are difficult to use in other fields and which occupy a great volume due to its low density (for example rice husks) creating a very significant environmental problem in production areas. For example the rice husk problem that arouse in the Valencian Community (Spain)
- The present invention provides a solution to the use of acidic ash from the incineration of agricultural waste from the grass cultivation (example rice husk ash) which cannot be used as additions in normalised cements according to European standards, not even in concretes regulated by European standards, despite its pozzolanic properties, due to the fact that these uses are not allowed by the standards currently in force.
- The invention proposes an efficient use of this ash and solves the problem of its storage in landfills since their current applications do not have sufficient capacity for using neither the entire volume nor all the types of acidic ash generated.
- As described in the present invention, obtaining ash of agricultural waste allows, as a result of cultivation specifications and of the possible permanent burning control, the ideal characterisation of silicon crystalisation conditions and the proportions of the other minority elements, gaining an advantage over the use natural raw materials of mineral origin and over the raw materials from industrial processes.
- As described in the present invention, using ash of agricultural waste from grass cultivation as silicon donor in this process provides the advantage of preserving the natural raw materials (quartz, silicon, feldspars, micas among others), making this process environmental friendly.
- In the process described in the present invention adding Na(OH) or K(OH) as activators in the hydrothermal treatment phase is not required since these components are incorporated in the ash of agricultural waste in sufficient proportions and the ash obtained are more reactive due to their low degree of crystalisation with respect to the raw materials proposed in other inventions.
- As described in the present invention, all the energy necessary for decarbonising the limestone consumed in the process comes from the controlled combustion of agricultural waste used (e.g.: rice husk), which entails using 100% biomass fuel, with the consequent reduction of CO2, S02 and NOx emissions by not using fossil fuels in the process.
- By applying the microwaves in the process of the present invention significant advantages are obtained with respect to those obtained in hydrothermal synthesis using conventional sources for generating and transmitting heat (heating with oil bath, kiln or electric resistances, among others):
   ■ There is an energy transfer mechanism instead of heat transfer mechanism occurs with the corresponding economical-ecological advantages. Introducing the microwave energy in the chemical reaction system results in much greater reaction rates than those obtained by conventional methods in conventional kilns. Therefore the synthesis times can be significantly reduced.
   ■ The microwave energy is introduced into the chemical reactor, without direct contact between the energy source and the reacting chemicals, leading to a significantly different and more homogenous temperature profile for the hydrothermal treatment reaction and, thus, a more uniform particle size distribution is generated.
   ■ "Hot spots" yielded on local boundaries by reflections and refractions of microwaves and may result in a "super-heating" effect.
   ■ The microwave field energy is directly transferred to the material on which it acts preventing energy inefficiencies obtained when other types of energy transfer which do not act so selectively are used, for example heat transmission in a conventional hydrothermal treatment process requiring transforming electric energy into heat for heating the bath which will in turn heat the reactor containing the matters subjected to the treatment before heating them.
      ○ Compared with conventional hydrothermal synthesis, microwaves provide non-thermal effects, such as dipole orientation arranging them in the area between layers of calcium silicate hydrate allowing the inclusion of more water molecules and ordering the structure, which provides an advantage with respect to the subsequent treatment.
      ○ Other non-thermal effects of the action of the microwaves is the breaking of the hydrogen bridges of the water molecules, creating what has been called "water-free molecules", accelerating the hydrothermal synthesis process.
      ○ As an alternative to the mechanical activation, the action of the microwaves on the calcium silicate hydrate, on one hand successfully removes the water molecule and on the other hand allows by selecting the suitable frequency weakening and arranging the hydrogen bridges of the structure based on silanol units conferring the material with the desired hydraulic activity.
- The process described in the present invention is an industrial manufacturing process at a greater scale than that of laboratory. It allows the practical use of laboratory assays described in the examples since all the techniques used in the phases of the process are completely scalable.

### Brief Description of the Drawings

The description of the method described above is complemented with a drawing in order to easily understand the steps of the invention.
Figure 1 shows a flux diagram with the new steps of the related invention

### Detailed Description of the Invention

As shown in Figure 1, the method of the invention can be grouped into the steps of:
- A.-Crushing limestone and optionally cutting agricultural waste
- B.- Controlled burning of ash and agricultural waste to give rise to acidic ash and decarbonising limestone
- C.- Hydrothermal treatment.
- D.- Hydraulic activation.

Together with these phases there is an associated system generated by the same process for harnessing energy from the heating capacity of the agricultural waste used for obtaining ash providing the silicon necessary so that the process can be carried out.

The present invention is described in more detail below with reference to several examples. However, these examples are not intended to limit the technical scope of the present invention.

### Example 1.

60 gr of rice husk with an ash content of 19.4% have been burned in a laboratory kiln. The ash contained 81.2 Si02. Burning has been controlled for 1 hour to not obtain temperatures higher than 700°C. The ash obtained are amorphous at Rx and it has been determined that the content of amorphous silica in the ash thus obtained is 100% by applying a modification of the UNE 80225:1993 standards which consists of reducing the leaching time with Na(OH). It has an actual density of 2.39 g/cm³ obtained by determination in the Toluene pycnometer and a specific surface area (BET Method by N2 absorption) of 54.2 m²/g.

150 gr of limestone with 54.49% CaO content have been burned in the same kiln for 14 hours at 850 °C.

A laboratory sample microwave digestion system of the brand CEM, model Mars, has been used for the hydrothermal treatment. 2.5 gr of the mixture of rice husk ash and decarbonated limestone in a CaO/SiO₂ molar ratio of 2.0 and 20 ml of deionised water have been introduced in a Teflon beaker with a capacity of 100 ml. The beaker has been hermetically closed and a heating programme with a ramp from 20- 200°C of 25 minutes and a residence time at 200°C of 30 minutes has been applied. The maximum microwave energy applied for obtaining these conditions was 860 Watts and the pressure of the beaker has not exceeded 8 bars.

The product obtained by applying these phases of the present invention is similar to that obtained by hydrothermal synthesis using a mixture of quartz sand having 95.2% total SiO₂ with the same decarbonated limestone and in the same CaO/SiO₂ molar ratio of 2.0 and with the same proportion of deionised water, in a stainless steel pressurised reactor, heated with oil bath at 200°C for 15 hours. The maximum pressure reached was 11.2 bars. The comparison has been performed by DRX, IR and TG. In this example the efficiency of the process object of the present invention is shown by:
○ the greater reactivity of the rice husk ash with 100% amorphous silica of plant origin compared with perfectly crystalised quartz sand of mineral origin,
○ the efficiency of the microwave field in this hydrothermal synthesis process with considerable time reduction, from the 15 hours needed in the hydrothermal process heated by means of oil bath to the 55 min needed with the microwave-assisted hydrothermal treatment,
○ the improvement in pressure conditions of 11.2 bars of the hydrothermal treatment with conventional heating of oil bath at at least 8.0 bars obtained when applying the microwave-assisted hydrothermal treatment.

### Example 2.

A mixture (mixture A) with a 1.7 molar ratio has been prepared using, as raw materials, rice husk ash and decarbonated limestone obtained in the same manner as and from the same materials as those described in Example 1.

Another mixture (mixture B) with a CaO/SiO₂ molar ratio of 1.7 has been prepared but replacing the rice husk ash with quartz as silicon donor.

The two samples have been subjected to microwave-assisted hydrothermal treatment under the same conditions and with the same programme as that described in the previous example. The analysis by XRD shows greater presence of Ca(OH)₂ in mixture B, which is an indication of a lower quartz reactivity with respect to rice husk ash.

### Example 3.

By way of example, not intended to limit the scope of this invention, an aliquot of the rice husk sample used in Example 1 has been taken and its heating power has been determined in a PARR brand model 1261 laboratory bomb calorimeter, 3,575 Kcal/kg being obtained as result.

The ash content of the rice husk sample determined by UNE-EN 14775:2010 Standards was 19.4% and the total SiO₂ of the ash determined by X-ray fluorescence was 81.2%.

0.35 tn of SiO₂ and 0.65 tn of CaO are needed for preparing one ton of mixture with a CaO/SiO₂ molar ration = 2. 2.22 tn of husk providing 7.93 Gcal in the combustion are necessary for obtaining 0.35 tn of SiO₂. Considering that the enthalpy of the decarbonising reaction is 475 kCal/Kg of CO₃Ca, theoretically 0.57 Gcal are needed for decarbonising 1.2 tn of CO₃Ca (limestone) generating 0.65 tn of CaO necessary in this example.

Considering a decarbonising process with a thermal efficiency of 30%, 1.89 Gcal are necessary for decarbonising 1.2 tn of CO₃Ca

Therefore, there is a residual heat of 6.04 Gcal per ton of product generated in the hydrothermal synthesis. In other words, the heat that can be harnessed for the material drying phases and for another way to make use of same in the rest of phases of the process , for example electric energy conversion for generating microwaves.

Additionally, another 7.93 Gcal of residual heat must be added by using rice husk ash in the hydraulic activation phase and by using a mixture of 50% by weight of ash with 50% by weight of product obtained in the hydrothermal synthesis phase.

## Claims

1. A method for manufacturing multi-phase hydraulic binders, **characterised in that** it comprises the steps of:
- crushing (A) limestone (A1),
- decarbonising the limestone (B1),
- crushing the limestone decarbonisation product (B3),
- hydrothermally treating (C) and drying the product obtained and
- hydraulically activating (D) the dried product.

2. The method for manufacturing multi-phase hydraulic binders according to claim 1, further comprising:
- cutting agricultural waste (A2) from grass cultivation;
- burning the agricultural waste (B2) by controlled combustion to give rise to acidic ash;
- mixing the acidic ash with the limestone decarbonisation product (B3),
- hydrothermally treating (C) the mixture obtained.

3. The method for manufacturing multi-phase hydraulic binders according to claim 2, wherein the crushing of the limestone (A1) is performed to a size smaller than 50 mm in a crusher of the type which are used for crushing raw materials in cement industry, and agricultural waste from grass cultivation is cut (A2) into fragments with a size less than 5 mm for the purpose of obtaining a good combustion thereof.

4. The method for manufacturing multi-phase hydraulic binders according toclaim 2 or 3, wherein the burning of agricultural waste from grass cultivation (B2) is performed in an incinerator of the type which are used for obtaining ash in temperature controlled conditions.

5. The method for manufacturing multi-phase hydraulic binders according to claim 4, wherein the decarbonisation of the limestone (B1) is performed by means of a heat recovery system installed in the incinerator, configured to allow harnessing the heat generated in the combustion (B2) for decarbonising the limestone necessary for the process, drying the product at the exit of the hydrothermal synthesis phase and allowing harnessing residual heat.

6. The method for manufacturing multi-phase hydraulic binders according to claim 5, wherein after mixing and grinding the mixture of ash (B3) obtained in the combustion of the agricultural waste from grass cultivation and the limestone decarbonisation product, 3% of Portland cement clinker or belite cement clinker is added in order for it to act as a precursor of the reaction forming the mixture of calcium hydroxide silicate phases.

7. The method for manufacturing multi-phase hydraulic binders according to any of the preceding claims, wherein the hydrothermal treatment (C) is performed in a pressurised reactor (C2) made of microwave transparent material, subjected to the action of a microwave generator with a frequency of 2.45 GHz adjusting the power for obtaining temperatures between 150 and 250 °C at pressures between 10-15 bar for the time period sufficient for removing or reducing the presence of Ca(OH)2 in the product obtained by this treatment to traces.

8. The method for manufacturing multi-phase hydraulic binders according to claim 7, wherein after the pressurised reactor (C2) a drying (C3) of the product obtained-is applied in the hydrothermal treatment phase for removing the uncombined water, until the absolute humidity of the material after this drying is less than 20%.

9. The method for manufacturing multi-phase hydraulic binders according to claim 8, wherein in the hydraulic activation step (D) the dry product from the hydrothermal treatment is mixed with a silica donor in a proportion of 10 to 50%.

10. The method for manufacturing multi-phase hydraulic binders according to claim 9, wherein the silica donor is acidic ash of agricultural origin from grass cultivation, quartz, blast furnace slag, fly ash or feldspars.

11. The method for manufacturing multi-phase hydraulic binders according to claim 10, wherein after mixing the dry product with a silica donor in a proportion of 10 to 50%, the mixture is submitted to the action of a microwave field with a frequency of 2.45 GHz for at least 15 minutes, such that the suitable coupling which allows reorganising hydrogen bridges and removing water molecules is obtained.

12. The method for manufacturing multi-phase hydraulic binders according to claim 11, wherein the end product is crushed in a disc, ball or roller mill for at least 200 seconds for completing the hydraulic activation of the calcium hydroxide silicate.
